# EUROPEAN PATENT SPECIFICATION

(11) **EP 0 388 541 B1**
(45) Date of publication and mention of the grant of the patent: **04.08.1993**
(21) Application number: 89302814.2
(22) Date of filing: 21.03.1989
(51) Int. Cl.: C04B 35/58, H01B 3/12, H01T 13/38, H01T 21/02

(54) **Production of a sintered reaction bonded silicon nitride insulator**
Herstellung eines reaktionsgesinterten Siliciumnitrid-Isolators
Fabrication d'un isolant en nitrure de silicium fritté par réaction

(43) Date of publication of application: 26.09.1990
(73) Proprietor: CHAMPION SPARK PLUG COMPANY, Toledo Ohio 43661-0001 (US)
(72) Inventor: Huang, Jow-Lay, Troy Michigan 48098 (US)
(74) Representative: Freed, Arthur Woolf

(56) References cited:
- EP-A- 0 240 177
- WO-A-84/01372
- FR-A- 2 607 130
- NATIONAL TECHNICAL INFORMATION SERVICE, December 1977, abstract no. NTN-78/0009, Springfield, Virginia, US; U.S. ARMY MATERIEL DEVELOPMENT AND READINESS COMMAND: "Controlling silicon-nitride dielectric quality"

## Description

### DEFINITIONS

As used herein, and in the appended claims, the terms "percent" and "parts" refer to percent and parts by weight, unless otherwise indicated; g means gram or grams; mg means milligram or milligrams; m means meter or meters; cm means centimeter or centimeters; mm means millimeter or millimeters; both micron and µm mean 10⁻⁶ meter; l means liter or liters; psi means pounds per square inch; and MPa means 10⁶ Pascals.

All temperatures herein are in degrees C., unless otherwise indicated.

### BACKGROUND OF THE INVENTION

### FIELD OF THE INVENTION

This invention relates to the production of a silicon nitride ceramic by a method which includes a reaction bonding step and a sintering step.

### THE PUBLISHED ART

U.S. patent No. 4,356,136, granted October 26, 1982 to Mangels, discloses that a reaction bonded silicon nitride ceramic can be packed in silicon nitride powder and a densification aid, and densified by a two step firing procedure in a nitrogen atmosphere. The first step is in a low pressure nitrogen atmosphere while the second is in a high pressure nitrogen atmosphere. Example 1 of the patent discloses a first step firing in 1.05 x 10⁸Kg/m² (15 psi.) nitrogen to 1875°C. and a second step firing in 2.07x10⁶N/m² (300 psi.) nitrogen to 1925°C.

U.S. patent 4,351,787, granted September 28, 1982 to Martinengo et al., discloses that a shape can be pressed from a mixture of silicon particles and a sintering aid, that the shape can be nitrided to produce a reaction bonded shape, and that the reaction bonded shape, after it has been embedded in a protective powder can be densified by firing in a nitrogen atmosphere. In Example 1, the protective powder is composed of Si₃N₄, BN, MgO and Fe and the firing is to 1800°C., final nitrogen pressure 1.33x10⁵N/m² (750 Torr).

U.S. patent 4,687,655, granted August 18, 1987 to Hunold et al., discloses (Example 6) that ceramics having a silicon nitride content of 99.1 percent, 98 percent of theoretical density, can be produced by cold isostatic pressing of a mixture of silicon powder, yttrium oxide powder and aluminum oxide powder, and subjecting the shapes which are produced to a two-stage firing in a high pressure nitrogen atmosphere. The first stage of the firing was to a maximum temperature of 1270°, nitrogen pressure from 50 to 80 MPa, while the second stage was to a maximum temperature of 1800°, nitrogen pressure from 80 to 150 MPa. The patent also states that cycles comparable to the Examples would last from 100 to 140 hours in the case of nitridation with nitrogen or nitrogen/hydrogen mixtures under normal pressure.

It has also been suggested (see, for example, U. S. patent No. 4,500,482, granted February 19, 1985) that a mixture of silicon, silicon nitride and an organic binder can be molded to a desired shape, nitrided, and hot isostatically pressed to produce a silicon nitride ceramic and (see, for example, GB PS 1 546 928, May 31, 1979) that a molding can be produced from silicon powder and sintered in an inert atmosphere to 60-75 percent of theoretical density prior to nitriding to form silicon nitride.

French patent specification No. 2 607 130 relates to ceramics composites of silicon nitride with fibrous reinforcement. Tough compounds of carbon silicon fibres derived from silicon nitride matrices are obtained by pre-coating the fibres with pyrolytic carbide and by reducing the nitriding or any other method of forming the silicon nitride matrix in such a way that a thickness of at least 5 nanometres of carbide remains in the compound after its formation. A number of compounds having similar properties can be obtained by producing around the fibres a space which can be partially filled with silicon nitride whiskers.

### BRIEF DESCRIPTION OF THE INSTANT INVENTION

The instant invention is a method for producing a sintered reaction bonded nitride insulator. The method comprises mixing powdered silicon having an average particle size not greater than 5µm with a suitable amount of a sintering aid pressing a shape from the resulting mixture, calcining the shape, grinding the calcined shape to a desired contour, and heating the ground shape in a nitrogen atmosphere at a pressure of about 1.03x10⁵N/m² (1 atmosphere) absolute. The sintering aid, most desirably, is 3 to 7 percent each of MgO and CeO₂, but can also be 2 to 8 percent of Y₂O₃, 6 percent of Y₂O₃ and 2 percent of A1₂O₃, or 2 to 8 percent of MgO, BeO, HfO₂ or ZrO₂. Heating of the ground shape is controlled, until a reaction bonded Si₃N₄ body in which at least 99 percent of the Si in the initial charge is reacted to Si₃N₄, so that reaction between nitrogen and the ground shape is substantially complete at any given temperature before the shape is heated above that temperture, and, thereafter, to produce a sufficient amount of a cerium-magnesium silicate or other glass to produce a Si₃N₄ body having from 85 to 90 percent of theoretical density.

### DESCRIPTION OF THE PREFERRED EMBODIMENTS

The invention will be more fully understood from the following Example, which constitutes the best mode presently contemplated by the inventor.

### EXAMPLE

Silicon nitride insulators were produced from 550g powdered silicon which contained substantially 0.43 percent of iron, 38g Mgo and 38g CeO₂. The powdered silicon had previously been dry milled for fifteen hours with 1.2g triethanolamine to an average particle size of 4µm, range 2-20 µm. A charge made up of the silicon, the MgO, the CeO₂, and 950ml anhydrous ethyl alcohol was milled for four hours in a jar mill and the slurry from the mill was dried by distilling the ethanol from a rotating flask. Cylindrical shapes about 19mm in diameter, 51mm in length, and having a central bore about 7mm in diameter were then pressed, using an isostatic press, from the dried material, pressing pressure 2.07x10⁸N/m² (30,000 psi, about 207 MPa).

The pressed shapes were heated in air at about 74° per hour to 480°, one hour dwell, to volatilize the triethanolamine, and were then calcined under vacuum at a temperature of about 1000°, one hour dwell, to improve the green strength. The calcined bodies were then ground to a desired shape, and the ground bodies were placed in a molybdenum setter which, in turn, was placed in an electrically heated furnace with a tungsten heating element; the furnace was evacuated; and the bodies were fired. The firing involved:
(1) heating to 750° at about 6° per minute, and holding at 750° for two hours, initially maintaining the vacuum in the furnace;
(2) after about 1½ hours of the hold at 750°, introducing an atmosphere composed of 71 volume percent nitrogen, 25 volume percent helium and 4 volume percent hydrogen into the furnace to increase the absolute pressure therein to about 1.14x10⁵N/m² (1.1 atmospheres) and applying an atmosphere of this composition to the furnace to maintain the indicated pressure;
(3) at the end of the hold at 750°, and thereafter throughout the remainder of the cycle, applying nitrogen (rather than the atmospehere composed of nitrogen, helium and hydrogen) to the furnace to maintain a pressure of about 1.1 atmospheres, and commencing heating to 1430° at a nominal rate of 5° per hour, but with a dwell whenever a sensor received a signal indicating an appreciable consumption of nitrogen;
(4) heating to 1550° at 5° per minute as soon as reaction between the bodies and nitrogen was complete (in most cases reaction was complete when the furnace reached 1430°);
(5) holding at 1550° for two hours; and
(6) cooling at 15° per minute in the furnace.
The resulting insulators were found to have densities which were about 87 percent of the theoretical density, and to be composed of sintered reaction bonded silicon nitride which was essentially devoid of silicon and a small amount of a ceria-magnesia silicate glass. They had excellent dielectric properties, for example, a dielectric strength greater than 3.6x10⁵V/m (360 volts per millimeter) at a wall thickness of 1.3mm, because there was essentially no contamination of the silicon nitride by conductive impurities such as silicon. They were admirably suited for use as spark plug insulators because their erosion, when subjected to a spark discharge, was comparable to that of conventional electrode materials, and because they had excellent resistance to thermal shock; for example, the delta T required to cause cracking was greater than 900°. They were also strong, as indicated by a four point bend strength of 5.1x10⁸N/m² (74,000 psi).

It has been found that the MgO-CeO₂ sintering aid in insulators produced as described in the foregoing example is highly advantageous because it volatilizes to a limited extent, during firing, and, as a consequence, limits the theoretical density that can be achieved to one in the range of about 85 to 90 percent, thereby assuring the previously mentioned spark erosion match with conventional electrode materials. However, the method is also operable when other sintering aids are substituted therefor; for example, the MgO-CeO₂ can be replaced by 2 to 8 percent of Y₂O₃, by 6 percent of Y₂O₃ and 2 percent of Al₂O₃, by 2 to 6 percent of MgO, by 2 to 6 percent of BeO, by 2 to 6 percent of HfO₂, or by 2 to 6 percent of ZrO₂. Indeed, the procedure of Example 1, supra, has been carried out to produce insulators from the silicon identified above and other sintering aids or sintering aid compositions. Representative starting compositions are set forth in the following table:

| Composition in Parts | | | | |
|---|---|---|---|---|
| | Silicon | Y₂O₃ | Al₂O₃ | MgO |
| Example 2 | 550g | 47.8g | --- | --- |
| Example 3 | 550g | 31.9g | 15.9g | --- |
| Example 4 | 550g | --- | --- | 35.1g |
| Example 5 | 550g | --- | --- | 17.0g |

The Example 2 insulators were found to have densities of 2.45 g/cm³, and to be composed of sintered reaction bonded silicon nitride which was essentially devoid of silicon. It is apparent from the foregoing data and phase considerations that when the Example 2 procedure is repeated, using a firing temperature of about 1900°, insulators composed of sintered reaction bonded silicon nitride which is essentially devoid of silicon and a small amount of an yttrium silicate glass are produced, and are admirably suited for use as spark plug insulators.

The Example 3 insulators were found to have densities of 2.45 g/cm³, and to be composed of sintered reaction bonded silicon nitride whach was essentially devoid of silicon. It is apparent from the foregoing data and phase considerations that when the Example 3 procedure is repeated, using a firing temperature of about 1825°, insulators composed of sintered reaction bonded silicon nitride which is essentially devoid of silicon and a small amount of an yttrium aluminum silicate glass are produced, and are admirably suited for use as spark plug insulators.

The Example 4 insulators were found to have densities of 2.64 g/cm³, a dielectric strength of 4.42x10⁵V/m (442 volts per mil) at a wall thickness of 1.3mm, and to be composed of sintered reaction bonded silicon nitride which was essentially devoid of silicon and contained a small amount of a magnesium silicate glass; they were admirably suited for use as spark plug insulators.

The Example 5 insulators were found to have densities of 2.58 g/cm³, a dielectric strength of 3.66x10⁵V/m (366 volts per mil) at a wall thickness of 1.3 mm, and to be composed of sintered reaction bonded silicon nitride which was essentially devoid of silicon and contained a small amount of a magnesium silicate glass; they were admirably suited for use as spark plug insulators.

It has also been found that the small amount of iron in the silicon starting material used in practicing the method described in the foregoing Examples is advantageous, because it acts as a catalyst for the removal of SiO₂ from the insulators, about 0.2 to 0.6 percent thereof being desirable in the batch. Fe₂O₃ (or NiO) can also be used to catalyze the removal of SiO₂, the amount required being that which introduces about 0.2 to 0.6 percent of Fe. The Fe or Fe₂O₃ in a batch used to produce an insulator as described above is present in the insulator as FeSi₂, which forms during the nitridation process.

It will be appreciated that various changes and modifications can be made from the details of the instant invention as described above without departing from the spirit and scope thereof as defined in the appended claims and that, in its essential details, the invention is a method for producing a sintered reaction bonded silicon nitride insulator, which method comprises mixing powdered silicon having an average particle size not greater than 5µm with a suitable amount of a sintering aid, pressing a shape from the resulting mixture, calcining the shape, grinding the calcined shape to a desired contour, and heating the ground shape in a nitrogen atmosphere at a pressure of about 1 atmosphere absolute. The sintering aid, most desirably, is 3 to 7 percent each of MgO and CeO₂, but can also be 2 to 8 percent of Y₂O₃, 6 percent of Y₂O₃ and 2 percent of Al₂O₃, or 2 to 8 percent of MgO, BeO, HfO₂ or ZrO₂. The heating of the ground shape is controlled, until a reaction bonded Si₃N₄ body is produced in which at least 99 percent of the Si in the initial charge is reacted to Si₃N₄, so that reaction between nitrogen and the ground shape is substantially complete at any given temperature before the shape is heated above that temperature, and, thereafter, to produce a sufficient amount of a cerium-magnesium silicate or other glass to produce a Si₃N₄ body having from 85 to 90 percent of theoretical density. Preferably, from about 1 to 10 volume percent of hydrogen is introduced into the furnace at the beginning of the firing cycle. Preferably, also, from about 20 to 30 volume percent of helium is introduced into the furnace at the beginning of the firing cycle.

## Claims

1. A method for producing a sintered reaction bonded silicon nitride insulator, which method comprises mixing powdered silicon having an average particle size not greater than 5µm with a suitable amount of a sintering aid pressing a shape from the resulting mixture, calcining the shape, grinding the calcined shape to a desired contour, heating the ground shape in a nitrogen atmosphere at a pressure of about 1 atmosphere absolute, and controlling the heating rate:
(a) until a reaction bonded Si₃N₄ body is produced in which at least 99 percent of the Si in the initial charge is reacted to Si₃N₄, so that reaction between nitrogen and the ground shape is substantially complete at any given temperature before the shape is heated above that temperature, and
(b) thereafter, to produce, by reaction involving the sintering aid, a sufficient amount of a glass to produce a Si₃N₄ body having from 85 to 90 percent of theoretical density,
wherein the suitable amount of a sintering aid is from 3 to 7 percent each of MgO and CeO₂, 2 to 8 percent of Y₂O₃, 6 percent of Y₂O₃ and 2 percent of Al₂O₃, or 2 to 8 percent of MgO, BeO, HfO₂ or ZrO₂.

2. A method as claimed in claim 1 wherein the sintering aid is from 3 to 7 percent each of MgO and CeO₂, and the firing to complete the reaction between nitrogen and the ground shape is to a maximum temperature of about 1430°.

## Patentansprüche

1. Ein Verfahren zur Herstellung eines reaktionsgesinterten Siliciumnitrid-Isolators, welches Verfahren darin besteht Siliciumpuder einer mittleren Teilchengröße von nicht mehr als 5 µm mit einer angemessenen Menge eines Sinterungsmittels zu mischen, von der erhaltenen Mischung ein Formteil zu pressen, das Formteil zu kalzinieren, das kalzinierte Formteil gemäß einem gewünschten Profil abzuschleifen, das abgeschliffene Formteil in einer Stickstoffatmosphäre bei einem Druck von ungefähr 1 absoluten Atmosphäre zu heizen und den Heizgrad zu regeln:
(a) bis zur Herstellung eines durch Reaktion gebundenen Si₃N₄-Körpers, in dem mindestens 99 Prozent des Si in der Anfangsladung in Si₃N₄ reagiert haben, so daß die Reaktion zwischen dem Stickstoff und dem abgeschliffenen Formteil praktisch bei jeder vorgegebenen Temperatur komplett ist, bevor das Formteil über dieser Temperatur erhitzt wird, und
(b) um nachher, durch Reaktion mit Hilfe des Sinterungsmittels, eine genügende Menge Glas herzustellen, um einen Si₃N₄-Körpers herzustellen, mit 85 bis 90 Prozent theoretischer Dichte,
in welchem die angemessene Menge eines Sinterungsmittels zu 3 bis 7 Prozent aus jeder der Verbindungen MgO und CeO₂, zu 2 bis 8 Prozent aus Y₂O₃, zu 6 Prozent aus Y₂O₃ und zu zwei Prozent aus Al₂O₃, oder zu 2 bis 8 Prozent aus MgO, BeO, HfO₂ oder ZrO₂ besteht.

2. Ein Verfahren gemäß Anspruch 1, in welchem das Sinterungssmittel zu 3 bis 7 Prozent aus jeder der Verbindungen MgO und CeO₂ besteht und in welchem die Heizung zur Reaktionsvervollständigung zwischen dem Stickstoff und dem abgeschliffenen Formteil eine Maximaltemperatur von ungefähr 1.430° erreicht.

## Revendications

1. Un procédé de fabrication d'un isolant en nitrure de silicium fritté par réaction, ce procédé comprenant le mélange de poudre de silicium présentant une dimension moyenne de particule non supérieure à 5 µm avec une quantité appropriée d'un adjuvant de frittage, la compression d'un moulage du mélange résultant, la calcination du moulage, la rectificatlon du moulage calciné au profil désiré, le chauffage du moulage rectifié dans une atmosphère d'azote à une pression d'environ 1 atmosphère en mesure absolue, et le réglage du taux de chauffage:
(a) jusqu'à l'obtention d'un corps en Si₃N₄ fixé par réaction, dans lequel au moins 99 pour cent du Si de la charge initiale a réagi en Si₃N₄, de façon que la réaction entre l'azote et le moulage rectifié est pratiquement complète à n'importe quelle température donnée, avant le chauffage du moulage au-dessus de cette température, et
(b) pour produire ensuite par réaction, englobant l'adjuvant de frittage, une quantité suffisante d'un verre pour produire un corps de Si₃N₄ ayant entre 85 à 90 pour cent de densité théorique, dans lequel la quantité appropriée d'un adjuvant de frittage comprend de 3 à 7 pour cent de chacun des composés de MgO et de CeO₂, de 2 à 8 pour cent de Y₂O₃, 6 pour cent de Y₂O₃ et 2 pour cent de Al₂O₃, ou de 2 à 8 pour cent de MgO, BeO, HfO₂ ou ZrO₂.

2. Un procédé selon la revendication 1, dans lequel l'adjuvant de frittage comprend de 3 à 7 pour cent de chacun des composés de MgO et de CeO₂, le chauffage pour compléter la réaction entre l'azote et le moulage rectifié atteignant une température maximale d'environ 1.430°.
